# EUROPÄISCHE PATENTSCHRIFT

(11) **EP 0 936 413 B1**
(45) Veröffentlichungstag und Bekanntmachung des Hinweises auf die Patenterteilung: **27.08.2003**
(21) Anmeldenummer: 99101297.2
(22) Anmeldetag: 25.01.1999
(51) Int. Cl.: F24D 10/00

(54) **Wasserheizungsanlage mit Regler für die Heizwassertemperatur**
Water heating installation with controller for the water temperature
Installation d'eau chaude avec régulateur pour la température d'eau

(30) Priorität: 13.02.1998 CH 35798; 03.12.1998 CH 240698
(43) Veröffentlichungstag der Anmeldung: 18.08.1999
(73) Patentinhaber: Siemens Building Technologies AG, 6300 Zug (CH)
(72) Erfinder: Baggenstos, René, 14159 Huddinge (SE); Stefan, Jack, 8913 Ottenbach (CH); Kocher, Peter, 6043 Adligenswil (CH)
(74) Vertreter: Berg, Peter, Dipl.-Ing.

(56) Entgegenhaltungen:
- WO-A-97/36138
- US-A- 4 905 894

## Beschreibung

Die Erfindung bezieht sich auf einen Regler fiir die Heizwassertemperatur einer Wasserheizungsanlage,
wobei die Wasserheizungsanlage eine Kaltwasserleitung, eine Wasserheizung, ein Stellglied für die Regelung der Wasserheizung, eine Heizwasserleitung, ein Wassertemperaturfühler, und ein oder mehrere Heizwasserverbrauchsgeräte umfasst, wobei die Wasserheizung einerseits an der Kaltwasserleitung angeschlossen ist, wobei die Wasserheizung eine oder mehrere, aneinander angeschlossene
Wasserleitungen umfasst, wobei die Wasserheizung andererseits an der Heizwasserleitung angeschlossen ist, wobei der Wassertemperaturfühler in der Heizwasserleitung oder in der Wasserheizung auf der Seite der Heizwasserleitung angeordnet ist, wobei die Heizwasserverbrauchsgeräte an der Heizwasserleitung angeschlossen sind, wobei der Regler wenigstens ein Signal des Temperaturfühlers bekommt und die Stellung des Stellglieds regeln kann.

Eine Wasserheizungsanlage der eingangs genannten Art ist beispielsweise aus der WO 97/36138 bekannt.

Diese offenbart eine Wasserheizungsanlage, wobei Änderungen hinsichtlich Temperatur und Durchflussmenge des im Sekundärkreis zirkulierenden Wassers mittels entsprechender Sensoren erfasst werden.

In Abhängigkeit von den detektierten Änderungen steuert ein Regler ein im Primärkreis vorgesehenes Stellglied, welches daraufhin den Durchfluss im Primärkreis entsprechend regelt.

Wasserheizungsanlagen müssen eine äusserst lange Standzeit aufweisen, wegen dem Preisdruck nur wenige einfache Komponenten enthalten, und dürfen wegen dem Installierungsaufwand keine komplexen und vieldrahtigen elektrischen Verkabelungen enthalten. Gleichzeitig fordern schon seit vielen Jahren die von den Behörden überwachten administrative Regelungen in einigen Länder, und die erhöhte Qualitätsansprüche der Endbenutzer fast überall, dass das Heizwasser unter allen Verbrauchsumständen eine sehr stabile Temperatur hat. Manchmal ist nur eine Abweichung von bis zu 10 Grad Kelvin überhaupt, und bis zu 2 Grad Kelvin nach 2 Minuten erlaubt.

In praktisch allen Wasserheizungsanlagen können die Heizwasserverbrauchsgeräte völlig geschlossen werden. Die meisten Wasserheizungsanlagen weisen eine Rückwasserleitung zwischen Heizwasserleitung und Kaltwasserleitung auf, manchmal mit Zirkulationspumpe, wodurch beim Absperren aller Heizwasserverbrauchsgeräte das Heizwasser durch die Rückwasserleitung zurückgeführt wird. Mit oder ohne Rückführung, die Wärmeabgabe der Wasserheizungsanlage ist so einige Grössenordnungen kleiner als diejenige bei Vollbetrieb oder bei Teilbetrieb der Heizwasserverbrauchsgeräte. Aber auch bei Vollbetrieb aller Heizwasserverbrauchsgeräte kann die Wärmeabgabe ähnlich tief wie bei völliger Absperrung sein: zum Beispiel falls die Heizwasserverbrauchgeräte Heizkörper in einem von Sonnenlicht durchfluteten Zimmer sind. Darüber hinaus reagiert eine Wasserheizungsanlage bei einem solchen lastlosen Betrieb meistens viel langsamer auf Änderungen des Stellglieds, weil weniger Wasser durch die Wasserheizung strömt, also dessen Geschwindigkeit abnimmt und es das Wasser mehr Zeit kostet den Wassertemperaturfühler zu erreichen. Es gibt also bei alle bekannten Wasserheizungsanlagen für die Regler unvorhersehbare Sprünge der Wärmeabgabe und der Dauer des Wirkungsablaufs. Wie schon erwähnt wurde, ist es aber sehr wichtig für Wasserheizungsanlagen, dass diese Sprünge nicht zu grossen Temperaturänderungen führen.

Heizwasserverbrauchsgeräte können auch Brauchwassergeräte sein, wie Hähne und/oder Duschen. In diesem Fall ist ein Heizwasserverbrauchgerät nicht an die Kaltwasserleitung angeschlossen. Das Kaltwasser wird aus einer externen Quelle gewonnen. Heizungskörper dagegen sind einerseits an der Heizwasserleitung und andererseits an der Kaltwasserleitung angeschlossen.

Seit langem besteht zusätzlich eine Tendenz, keine grossen Heizwasserkessel oder dergleichen in Wasserheizungsanlagen aufzunehmen. Sämtliche wesentliche Wasserbehälter innerhalb der obengenannten Wasserheizung sind von einer oder mehreren, aneinander angeschlossenen Wasserleitungen gebildet worden. Grund dafür ist, neben dem offensichtlichen Kostenvorteil und dem geringeren Platzbedarf, die grössere Anwendung der Wasserheizung mittels Wärmetauscher aus einem primären Kreis, wobei die Effizienz der Wärmeübertragung an schon teilweise geheiztes Wasser im Kessel nachlassen würde. Wichtig ist aber die Erkenntnis, dass die üblicherweise wegen Abgabeschwankungen auftretende Lastdifferenzen der Wasserheizungsanlage bei diesen Anlagen nicht von einem grossen Heizwasserbehälter ausgeglichen werden.

Das letztere Phänomen gibt es auch, falls nur ein kleiner Wasserbehälter anwesend ist, wobei die Grössenordnung seines Volumen nicht das Gesamtvolumen aller relevanten Wasserleitungen übersteigt.

Das Stellglied eines Wärmetauschers kann ein Durchflussstellglied, wie ein motorisiertes Ventil, im primären Kreis sein, oder eine motorisierte Pumpe. Neben Wasserheizung mittels Wärmetauscher müssen hier auch die elektrischen Wasserheizungen genannt werden, welche auch im Wesen eine oder mehrere, aneinander angeschlossene Wasserleitungen umfassen. Andere Anwendungsbeispiele sind gewisse Gasbrennerheizungen.

Viele der bekannten Wasserheizungsanlagen der am Anfang genannten Art lösen einen relativ hohen Verschleiss gewisser Teile aus, vor allem von Antrieben von Wasserventilen oder dergleichen. Deswegen sind auch gerade hier verschleissfeste Regleralternativen entwickelt oder wieder neu-eingesetzt worden, wie zum Beispiel ein rein hydraulischer Wasserventilregler. Diese Alternativen bringen aber schwerwiegende Nachteile gegenüber dem elektronischen Regler mit motorisierten Antrieb, weswegen sie niemals zur Marktdominanz geführt haben: sie sind teuer, schwierig zu installieren und in hohem Masse unflexibel. Darüber hinaus kann man sie nicht ohne teuere Schnittstellen in eine übergeordnete elektronische Gebäuderegelung oder -steuerung aufnehmen. Eine andere teuere Lösung aus dem Stand der Technik ist die Anwendung verschiedener, parallel geschaltete Stellglieder mit je einem Regelbereich, so dass wenigstens das sogenannte Mengensprung-Problem beseitigt und sonst der Verschleiss über alle Stellglieder verteilt ist.

Warum gibt es diesen relativ hohen Verschleiss? Man muss einen Kompromiss suchen zwischen Standzeit, Kostendruck, Vereinfachung und stabiler Heizwassertemperatur, welches um so schwieriger wird bei den Reglern für Wasserheizungsanlagen der im Anfang genannten Art, wobei weniger Einfluss durch Heizwasserbehälter stattfindet. Es hat sich erwiesen, dass der Stellgliedantrieb gerade während langen Zeiten mit einer kleinen Last relativ zu oft beansprucht wird als Folge von vermeidbaren und darum unerwünschten Regelschwankungen. Dies weil gezeigt worden ist, dass man mit entweder teureren Ergänzungen oder den jetzigen erfinderischen Massnahmen diese Lage mit gleich stabiler Heizwassertemperatur und sonstigen Bedingungen erheblich bessern kann.

Die erfinderische Wasserheizungsanlage mit Regler ist dadurch gekennzeichnet, dass wenigstens falls die Heizwasserverbrauchgeräte wenig Wärmeabgabe auslösen, der Regler sich von einem ersten Regelverfahren auf mindestens ein von dem Mass und/oder Verzögerung der Reaktion bei gleichen Regelumständen verschiedenes zweites Regelverfahren umschalten kann, und dass anderenfalls der Regler sich sprungartig von dem zweiten Regelverfahren auf das erste Regelverfahren zurückschalten kann.

Wenig Wärmeabgabe der Heizwasserverbrauchgeräte heisst hier, dass die Grössenordnung der Wärmeabgabe gleich oder kleiner ist als die Wärmeabgabe eines Reglers aus dem Stand der Technik in derselben Heizwasseranlage bei wiederholten Schwankungen der Heizwassertemperatur.

Wie schon oben erwähnt worden ist, bringt die Erfindung eine Lösung für ein altes Problem. Kostendruck, Vereinfachung und vielleicht gewissermassen Ungewissheit über die Ursachen sperrten schon lange andere Wege, bei denen man mit Aufwand Zusatzkomponenten aufnahm, wie ein zusätzlicher Rücklaufthermometer mit seinen separat zu installierenden elektrischen Leitungen, welche eine kleine Verbesserung in die Rückmeldungszeit und Genauigkeit der Regelung bringen könnte. Die Alternative eines normalen adaptiven Regler, zum Beispiel ein sogenannter mü/sigma-Regler, würde seine Reaktionsstärke bei stark ändernden Heizwasserverbräuchen nicht genügend schnell anpassen können um eine stabile Heizwassertemperatur einzuhalten.

Erfindungsgemäss kann übrigens das erste Regelverfahren auch ein adaptives Regelverfahren sein.

Der Regler gemäss der Erfindung hat vorteilhafterweise noch die Zusatzkennzeichen, dass der Regler für das erste Regelverfahren geltende Regelparameter während des zweiten Regelverfahrens speichern kann, und dass der Regler sprungartig von dem zweiten Regelverfahren auf das erste Regelverfahren zurückschalten kann durch Annahme dieser gespeicherten Regelparameter.

Dies ermöglicht ein rasches Reagieren auf schwierigste Lastdifferenzen. Eine Alternative würde zum Beispiel eine vorprogrammierte, während einer Übergangszeit aktive Steuerung sein, welche in einem schnellen Puls stark aber unkontrolliert in die sich ändernde Lage eingreift, bevor sie sie an das erste Regelverfahren übergibt.

Mit Vorteil ist der erfindungsgemässe Regler dadurch gekennzeichnet, dass der Regler unter gewissen Regelumständen von dem ersten Regelverfahren auf das zweite Regelverfahren umschaltet, wobei unter den besagten Regelumständen der Absolutwert der Regeldifferenz kleiner ist als eine vorgewählte und/oder adaptiv angepasste Grenze, und der Absolutwert der Regeldifferenzänderung pro Zeiteinheit kleiner ist als eine vorgewählte und/oder adaptiv angepasste Grenze, dass der Regler gemäss dem zweiten Regelverfahren das Mass seiner Reaktion bei gleichen Regelumständen kleiner macht, und dass der Regler unter anderen Regelumständen unmittelbar von dem zweiten Regelverfahren auf das erste Regelverfahren zurückschaltet.

Dies ist eine von drei verschiedenen Ausführungen, welche dem Erfindungsergebnis je spezifische Vorteile bringen können. Man braucht für diesen Regler wirklich kein einziges Zusatzteil, er ist leicht in bestehende Anlagen zu installieren und er bringt trotzdem eine erhebliche Verbesserung für das Verschleissproblem, ohne dass die Stabilität der Heizwassertemperatur gefährdet ist. Zykluszeit bedeutet übrigens die Zeit, welche der Ausgang eines Reglers benötigt, um einen Zyklus zu vollenden. Das Mass der Reaktion ist im Sinne des Mittelwerts über die Zykluszeit gemeint worden, falls der Regler zum Beispiel Regelpulse verschiedener Länge, oder gleich lange aber verschiedener Frequenz, oder aber verschiedener Grösse abgibt.

Am besten ist diese Ausführung so ausgebildet, dass der Regler die beide Grenzen der besagten Regelumstände während des zweiten Regelverfahrens je adaptiv verringern kann. So passt sich der Regler besser an auftretende Beruhigungen an. Schwankungen in den Regelumständen, zum Beispiel wegen Klimaeinflüssen, sind während des zweiten Regelverfahren erwartungsgemäss relativ klein. Die Grenzen werden bevorzugt bis auf je eine vorgewählte Untergrenze verringert.

Vorteilhaft ist auch, dass der Regler gemäss dem zweiten Regelverfahren die Verzögerung seiner Reaktion bei gleichen Regelumständen vergrössert. Falls die Heizwasserverbrauchsgeräte wenig Wärmeabgabe auslösen, wird nämlich das Stellglied oft kleine Stellungswerte aufweisen. Ungenauigkeiten und NichtLinearität des Stellglieds sind dann relativ gross (Mengensprung-Problem). Zusätzlich ist dann die Dauer des Wirkungsablaufs der Wasserheizungsanlage viel grösser. Es wäre besser, dass der Regler nicht nervös auf diese systematische oder willkürliche Art von Abweichungen reagiert.

Weitere Vorteile bekommt man dadurch, dass der Regler gemäss dem zweiten Regelverfahren jede Zykluszeit proportional wählt zu einer, im ersten Regelverfahren geltenden Nachstellzeit, dividiert durch den Absolutwert von der Differenz zwischen der momentanen Regeldifferenz und dem Produkt von der momentanen Regeldifferenzänderung pro Zeiteinheit und einer Abstellzeit, und zwar am besten dadurch, dass der Regler gemäss dem zweiten Regelverfahren eine vorgewählte und/oder adaptiv angepasste Abstellzeit innerhalb eines Bereiches vom 1 bis 7 Sekunden aufweist, und einen vorgewählten und/oder adaptiv angepassten Proportionsfaktor zwischen 0,2 und 1,4 Kelvin.

Ein anderer Erfindungsregler ist vorteilhaft dadurch gekennzeichnet, dass der Regler unter gewissen Regelumständen von dem ersten Regelverfahren auf das zweite Regelverfahren umschaltet, wobei unter den besagten Regelumständen die Stellung des Stellglieds kleiner ist als eine vorgewählte und/oder adaptiv angepasste Grenze innerhalb das Stellungsbereiches, dass der Regler gemäss dem zweiten Regelverfahren das Mass seiner Reaktion bei gleichen Regelumständen kleiner macht, und dass der Regler unter anderen Regelumständen unmittelbar von dem zweiten Regelverfahren auf das erste Regelverfahren zurückschaltet.

Dies ist die zweite der obenerwähnten Ausführungen mit ihren unterschiedlichen Vorteilen. Man braucht für diesen Regler meistens ein billiges Zusatzteil oder einen etwas teuereren Stellgliedantrieb. Man bekommt eine ähnlich gute Verbesserung, wobei hier das Regelverfahren einfacher bleibt und damit tiefere Fertigungskosten und weniger Installierungsaufwand hervorbringt.

So kennzeichnet man diese zweite Ausführung vorteilhaft dadurch, dass der Regler die Stellung des Stellglieds auf ein oder mehrere feste Stellungswerte innerhalb das Stellungsbereich steuern kann, und dass der Regler die Grenze auf einen oder je einen festen Stellungswert legt. Dafür wird aber ein Antrieb benötigt, welcher von sich aus auf gewisse absolute Werte gesteuert werden kann, statt einer, an welchen nur Geschwindigkeitsbefehle gegeben werden können.

Es ist aber auch möglich, die zweite Ausführung dadurch zu kennzeichnen, dass die Wasserheizungsanlage einen Sensor umfasst,
wobei der Sensor die Stellung des Stellglieds auf einem oder mehreren festen Stellungswerten innerhalb das Stellungsbereich erkennen kann,
wobei der Regler wenigstens ein Signal des Sensors bekommt, und
dass der Regler die Grenze auf einen oder je einen festen Stellungswert legt. Hier muss ein zusätzlicher Sensor beschafft und miteinbezogen werden, was aber keine grossen Probleme schaffen dürfte, falls man einen schon in einen Antrieb oder Stellglied eingebauten Schalter verwendet.

Den letztgenannten Vorteil kann man in einem Regler erkennen, der dadurch gekennzeichnet ist, dass der Sensor ein Schalter im Stellglied ist, wobei der Schalter bei einer Stellung des Stellglieds unter einem festen Stellungswert betätigt wird.

Drittens gibt es ähnliche Vorteile bei der dritten der obenerwähnten Ausführungen, gekennzeichnet dadurch, dass der Regler unter gewissen Regelumständen von dem ersten Regelverfahren auf das zweite Regelverfahren umschaltet, wobei unter den besagten Regelumständen der Durchfluss von Heizwasser zu den Heizwasserverbrauchsgeräten kleiner ist als eine vorgewählte und/oder adaptiv angepasste Grenze, dass der Regler gemäss dem zweiten Regelverfahren das Mass seiner Reaktion bei gleichen Regelumständen kleiner macht, und dass der Regler unter anderen Regelumständen unmittelbar von dem zweiten Regelverfahren auf das erste Regelverfahren zurückschaltet.

Zum Beispiel regelt oder steuert ein HLK-Regler die Pumpe in gewissen Heizungsanlagekreise mit Heizungskörper, und kann deswegen jederzeit feststellen, ob die dann geltende Durchflussgrenze unterschritten ist. Man benötigt für diesen Regler also kein Zusatzteil oder zusätzliche elektrische Leitungen. Man bekommt eine ähnlich gute Verbesserung, wobei hier das Regelverfahren und der Regler etwas komplexer ausgestattet sein müssen. Gut wäre, dass der Regler den Durchfluss von Heizwasser zu den Heizwasserverbrauchsgeräten auf einen oder mehrere feste Durchflusswerte steuern kann, und dass der Regler die Grenze auf einen oder je einen festen Durchflusswert legt.

Andererseits kann die dritte Ausführung das Merkmal haben, dass die Wasserheizungsanlage einen Sensor umfasst, wobei der Sensor den Durchfluss von Heizwasser zu den Heizwasserverbrauchsgeräten bei einem oder mehreren festen Durchflusswerten erkennen kann, wobei der Regler wenigstens ein Signal des Sensors bekommt, und dass der Regler die Grenze auf einen oder je einen festen Durchflusswert legt.

Dieser Regler benötigt nicht mal ein Zusatzteil, wie einen Wasserzähler, falls so ein Wasserzähler schon im primären oder sekundären Kreis einer Heizungsanlage aufgenommen ist und den Durchfluss von Heizwasser zu den Heizwasserverbrauchsgeräten (direkt oder indirekt) erkennt. Die Verbesserung ist etwa gleichwertig, und das Regelverfahren ist einfacher.

Einige derjenigen Regler gemäss der Erfindung, welche Regelimpulse an das Stellglied geben, erkennt man leicht dadurch, dass sie dermassen schwach reagieren falls die Heizwasserverbrauchgeräte wenig Wärmeabgabe auslösen, dass die Dauer eines oder mehrerer Regelimpulse kleiner ist als 0,012 mal die Gesamtzeit für das ab Schlussstellung völlige Oeffnen des Stellglieds. Mit Vorteil sind einige Regelimpulse selbst kürzer als 0,003 mal die Gesamtzeit fiir das ab Schlussstellung völlige Oeffnen des Stellglieds.

Einige erfindungsgemässe Regler reagieren falls die Heizwasserverbrauchsgeräte wenig Wärmeabgabe auslösen mit dermassigen Verzögerungen, dass sie die Zykluszeiten grösser als 2 Sekunden wählen.

Im folgenden wird die Erfindung anhand der Zeichnungen näher erläutert. In der Zeichnung zeigt:
Fig. 1 ein Ausführungsbeispiel für eine Wasserheizungsanlage mit einem Regler gemäss der Erfindung, wobei nur einige Komponenten schematisch dargestellt sind.
Fig. 2 ein Beispiel der Temperaturregelung gemäss der Erfindung, wobei der.Verlauf der Regeldifferenz mit der Zeit dargestellt ist.
Fig. 3 ein weiteres Beispiel der Temperaturregelung gemäss der Erfindung, wobei der Verlauf der Regeldifferenz unter wechselndem Heizwasserverbrauch mit der Zeit dargestellt ist.
Fig. 4 ein Ausführungsbeispiel für eine Wasserheizungsanlage mit einem Regler gemäss der Erfindung, wobei nur einige Komponenten und ein Durchflussgeber schematisch dargestellt sind.

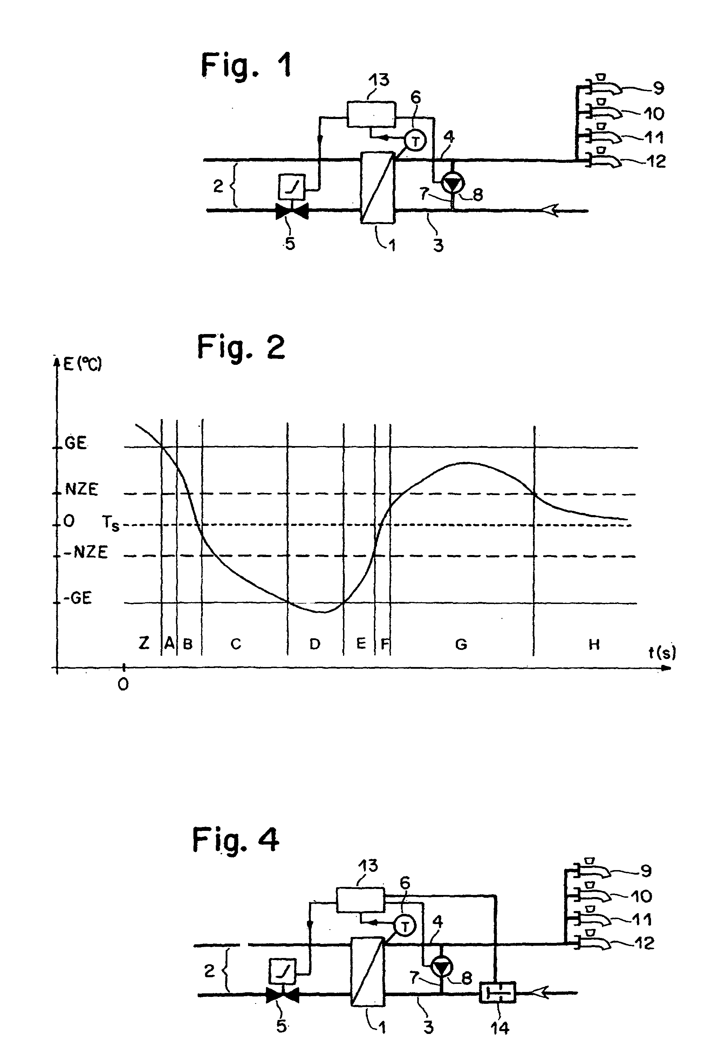

Die in Fig. 1 gezeigte Wasserheizungsanlage weist einen Wärmetauscher 1 auf, welcher durch Wasserleitungen 2 eines Primärkreises mit Fernwärme gespeist wird. Zur Anlage gehören weiter eine Kaltwasserleitung 3, eine Heizwasserleitung 4, ein motorgetriebenes Wasserventil 5, ein Wassertemperaturfühler 6, eine Rückwasserleitung 7 mit einer Zirkulationspumpe 8, und Hähne 9, 10, 11 und 12. Bei Lastbetrieb fliesst relativ kaltes Wasser durch die Kaltwasserleitung 3, fliesst immer wärmer durch den Wärmetauscher 1, fliesst völlig erwärmt durch die Heizwasserleitung 4, und fliesst meistens aus einem oder mehreren der Hähne 9 bis 12 aus. Bei ständiger Aktivität der Zirkulationspumpe 8 fliesst ein wenig Heizwasser von der Heizwasserleitung 4 durch die Rückwasserleitung 7 in die Kaltwasserleitung 3 zurück und mischt sich dort mit Kaltwasser.

Der Regler 13 gemäss der Erfindung empfängt Signale vom Wassertemperaturfühler 6, welcher die momentane Heizwassertemperatur mitteilt. Der Regler 13 gibt Signale an das motorisierte Ventil 5, wobei die Signale das Ventil dazu bringen sich einigermassen zu schliessen oder zu öffnen, in Abhängigkeit vom Zeitverlauf der Heizwassertemperatur. Der Regler 13 regelt somit den Wärmeaustausch zwischen dem Primärkreis und der Wasserheizungsanlage, wobei er versucht, die Heizwassertemperatur auf einem konstanten Sollwert Ts zu halten, welcher typischerweise 55 Grad Celsius oder 60 Grad Celsius beträgt.

Ohne Lastbetrieb, das heisst falls alle Hähne 9 bis 12 geschlossen sind, läuft noch immer die Zirkulationspumpe 8. Das Heizwasser in der Heizwasserleitung 4 wird jetzt vollständig an die Kaltwasserleitung 3 zurückgegeben, und bald bildet sich ein Kurzschlusskreis mit überall fast genau gleicher Heizwassertemperatur aus. Es hat sich erwiesen, dass dessen Wärmeabgabe typischerweise nur 0,5 % oder 1 % als diejenige unter normalen Lastbetrieb beträgt.

Gemäss der Erfindung ist entdeckt worden, dass gewisse Schwankungen während lastlosem Betrieb zu Gunsten der Standzeit vermieden werden können, ohne dass die immer erforderliche Stabilität der Heizwassertemperatur gefährdet ist, und auch wie man diese Schwankungen ohne grossen Preiskonsequenzen vermeidet. Die Wirkung der Erfindung ist in Fig. 2 erläutert.

Fig. 2 zeigt eine fiktive Dämpfung der schwankenden Heizwassertemperatur gemäss der ersten Ausführung der Erfindung ab dem Moment, nachdem die Wasserheizungsanlage in Fig. 1 von einem Betrieb mit üblicher Last auf einen lastlosen Betrieb umgeschaltet wird.

Entlang der horizontale Achse verläuft die Zeit t in Sekunden. Entlang der vertikale Achse verläuft die Regeldifferenz E in Grad Kelvin. Mit der Regeldifferenz E ist hier die Differenz zwischen dem Sollwert Ts und der wirklichen Heizwassertemperatur gemeint.

Der Regler 13 gemäss Erfindung schaltet sein normales, erstes Regelverfahren um auf ein zweites Regelverfahren, falls der Absolutwert der Regeldifferenz E kleiner ist als eine vorgewählte Grenze GE, und der Absolutwert der Regeldifferenzänderung pro Zeiteinheit D kleiner ist als eine vorgewählte und adaptiv verringerte Grenze GD. Die typische Grösse der Grenze GE kann 5 Grad Kelvin sein, und eine typische Grösse der Grenzc GD ist 3 Grad Kelvin pro Sekunde, wobei der Regler vorteilhaft diese Grenze GD adaptiv verringert auf 0,5 Grad Kelvin pro Sekunde in circa 15 Sekunden, wenn die Lage sich genügend beruhigt. Der Regler 13 regelt während seinem zweiten Regelverfahren schwächer und mit grösserer Verzögerung, wobei schrittweise, noch später erklärte Umschaltungen stattfinden. Sobald aber die Regeldifferenz E oder die Regeldifferenzänderung pro Zeiteinheit D ihre Grenze GE oder GD wieder übersteigt, schaltet der Regler unmittelbar von dem zweiten Regelverfahren auf das erste Regelverfahren zurück.

Für t < 0 s gibt es Voll- oder Teilbetrieb der Hähne 9 bis 12, und der Regler 13 regelt gemäss einem ersten, für jede Art von Voll- oder Teilbetrieb geeigneten Regelverfahren. Das ist hier ein sogenanntes PI-Regelverfahren, welches relativ stark reagiert auf Abweichungen vom Sollwert Ts. Verschiedene Arten der sogenannten PID-Regelverfahren sind üblich für die Anwendung in Wasserheizungsanlagen. Falls während Voll- oder Teilbetrieb eine Beruhigung in der Nähe von Ts stattfinden sollte, kann der Regler 13 übrigens auch dann schon von diesem ersten Regelverfahren auf oben erklärte Weise umschalten auf das zweiten Regelverfahren. Für t < 0 s ist solches aber nicht der Fall.

Auf t 0 s werden alle Heizwasserverbrauchsgeräte völlig geschlossen. Die Regeldifferenz E ist gerade dabei mit mässigen Regeldifferenzänderung pro Zeiteinheit D, oder Regeldifferenzgeschwindigkeit, auf seinen Sollwert 0 Grad hin zu fahren, wobei der Absolutwert der Regeldifferenzgeschwindigkeit (ein wenig) kleiner ist als deren Grenze, mit anderem Worte: ¦D¦ < GD. Weil aber der Absolutwert der Regeldifferenz E zu gross ist (¦E¦ > GE), regelt der Regler 13 auch im Zeitbereich Z gemäss dem ersten Regelverfahren.

Anfangs Zeitbereich A ist auch die Regeldifferenz E dermassen in der Nähe ihres Sollwertes 0 gekommen, dass der Regler 13 auf sein zweites Regelverfahren umschaltet. Der Regler 13 regelt jetzt schwächer und langsamer. Die während des ersten, starken Regelverfahrens kumulierte Regeldifferenzgeschwindigkeit D war aber so nah an der Grenze GD, dass sie sie am Ende des Zeitbereiches A trotzdem überschreitet, vielleicht auch wegen eines externen Einflusses. So schaltet der Regler 13 sich anfangs Zeitbereich B wieder um auf das erste Regelverfahren, diesmal also weil die Regeldifferenzgeschwindigkeit zu gross ist.

Eine starke Korrektur der Regeldifferenzgeschwindigkeit D während dem Zeitbereich B sorgt dafür, dass der Regler wieder das zweite, schwächere Regelverfahren annimmt im Zeitbereich C. Es tritt aber jetzt ein externer Einfluss auf, oder vielleicht war die Regeldifferenzgeschwindigkeit D noch etwas zu hoch fiir das zweite, schwächere Regelverfahren, und die Regeldifferenz E läuft beim Anfang des Zeitbereiches D wieder ausserhalb seiner Grenze GE.

Nach einer starken Korrektur gemäss dem ersten Regelverfahren in Zeitbereich D kehrt der Regler 13 während dem Zeitbereich E wieder in das zweite Regelverfahren zurück, jetzt aber schon mit kleinerer Regeldifferenzgeschwindigkeit D als beim Anfang des Zeitbereiches A. Trotzdem beschleunigt die Regeldifferenz E, später als im Zeitbereich A, noch kurz in das erste Regelverfahren während dem Zeitbereich F, wobei man in Betracht nehmen muss, dass die Grenze GD während dem längeren Zeitbereich E schon wesentlich adaptiv verringert worden ist. Die Regeldifferenz E beruhigt sich dann in den Zeitbereichen G und H vorläufig permanent, wobei der Regler 13 das zweite Regelverfahren benutzt.

Während des Zeitbereiches H befindet sich die Regeldifferenz E in der Neutralzone, deren Absolutwert eine Grenze NZE aufweist, in diesem Fall 1 Kelvin. Hier bleibt der Regler 13 gemäss zweitem Regelverfahren völlig inaktiv, das heisst, es wird gar keine Reaktion am motorgetriebenen Ventil 5 gegeben. Auf ähnliche Weise kann man eine Zone für die Regeldifferenzgeschwindigkeit D definieren, deren Absolutwert eine Grenze ZD aufweist, in diesem Fall 0,016 Kelvin pro Sekunde.

Im ersten Regelverfahren weist der Regler 13 einen vorgewählten Wert von 3 Kelvin pro Sekunde für die Grenze GD der Regeldifferenzgeschwindigkeit D auf. Wenn der Regler 13 sich von dem ersten auf das zweite Regelverfahren umschaltet, bleibt dieser Wert gleich, es sei denn die Regeldifferenz E ist in oder kommt in die Neutralzone NZE und die Regeldifferenzgeschwindigkeit D ist in seiner oder kommt in seine Zone ZD, in welchem Fall der Regler 13 anfängt diesen Wert adaptiv zu verringern. Regelt der Regler 13 weiter gemäss dem zweiten Regelverfahren, aber gerät die Regeldifferenz E ausserhalb die Neutralzone NZE und die Regeldifferenzgeschwindigkeit D ausserhalb seine Zone ZD, wird die Grenze GD wieder bis auf den vorgewählten Wert von 3 Kelvin pro Sekunde vergrössert. Die Grenze GD wird jedoch nicht geändert falls die Regeldifferenz E von dem Sollwert 0 Kelvin weg läuft, damit der Regler 13 am schnellsten auf Änderungen im Heizwasserbedarf reagieren kann durch Zurückschalten auf das erste Regelverfahren.

Der tiefste Wert, welcher die Grenze GD annehmen kann, ist hier 0,5 Kelvin pro Sekunde. Das entspricht einer realistischen Obergrenze für die bei Nullast völlig beruhigte Heizwasseranlage in Fig. 1. Ohne externen Einfluss seltener Grösse oder plötzliche Beanspruchung eines oder mehrerer Hähne, bleibt die Heizwasseranlage erwartungsgemäss und erfahrungsgemäss in stabiler, schwankungsloser Ruhe.

Die Verzögerung der Reaktion gemäss dem zweiten Regelverfahren äussert sich durch eine Zykluszeittz, welche gleich 0,5 Kelvin mal der im ersten PI-Regelverfahren geltenden Nachstellzeit Tn ist, dividiert durch den Absolutwert von der Differenz zwischen der momentanen Regeldifferenz E und 4 Sekunden mal der momentanen Regeldifferenzgeschwindigkeit D (tz=0,5 Grad kelvin x Tn/¦ E - 4 sekunden x D¦). Das entspricht eine Zykluszeittz von typischerweise 3 bis 17 Sekunden, wobei für ein PI-Regelverfahren gemäss dem Stand der Technik eine Zykluszeit bis circa 1 Sekunde üblich ist.

Das Mass der Reaktion gemäss dem zweiten Regelverfahren erkennt man zum Beispiel an der Dauer der Signalimpulse, welche der Regler 13 an das Ventil 5 übermittelt, im Vergleich zur Laufzeit des Ventils 5, mit welchem hier die Gesamtzeit für das ab Schlussstellung völlige Oeffnen des Ventils 5 gemeint ist. Wie schon beschrieben wurde, geschieht innerhalb der Neutralzone NZE nichts. Ist die Regeldifferenz E gerade ausserhalb der Neutralzone NZE, so beträgt die Dauer der Signalimpulse 0,001mal die Laufzeit. Ist die Regeldifferenz E gerade ausserhalb des Zweifachen der Neutralzone NZE, so beträgt die Dauer der Signalimpulse 0,002 mal die Laufzeit, falls die Regeldifferenz E sich dem Sollwert 0 Kelvin langsam nähert, und 0,004 mal die Laufzeit, falls sie sich erweitert. Umgekehrt wird ein bremsender Gegenimpuls in ähnlicher Grösse gegeben, falls die Regeldifferenz E auf den Sollwert von 0 K mit einer Regeldifferenzgeschwindigkeit D von mehr als 0,25 Kelvin pro Sekunde zueilt.

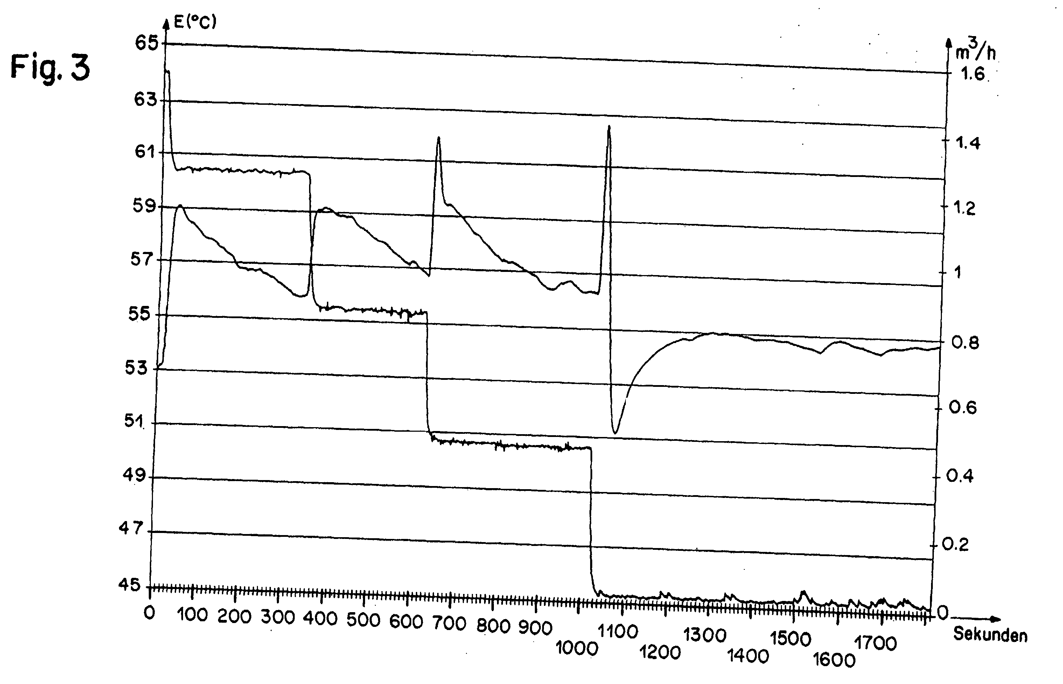

Fig. 3 zeigt eine gemessene Dämpfung der schwankenden Heizwassertemperatur gemäss erster Ausführung der Erfindung, ab dem Moment nachdem die Wasserheizungsanlage in Fig. 1 von einem Betrieb mit Vollast durch Schliessen jedes Hahnen schrittweise auf einen lastlosen Betrieb umgeschaltet wird.

Entlang der horizontalen Achse verläuft die Zeit t in Sekunden. Entlang der vertikale Achse verläuft die Regeldifferenz E in Grad Kelvin.

Beim Umschalten von Voll- auf je kleineren Teilbetrieb durch Schliessen der Hähne bis ungefähr circa 1030 Sekunden, regelt der Regler 13 auf ausgezeichnete Weise die Heizwassertemperatur, besser noch als ein Regler aus dem Stand der Technik das konnte, weil das Regelverfahren des letzteren Reglers zusätzlich geeignet sein musste, um während Nullast noch einigermassen vernünftig zu regeln. Beim Schliessen des letzten geöffneten Hahnes, bei ungefähr 1030 Sekunden, beruhigt sich die Regeldifferenz E schnell äusserst nahe an den Sollwert (Ts = 55 Grad Celsius). Hier zeigt sich vor allem der Unterschied mit den Ergebnissen des Standes der Technik, weil offenbar nervöse Schwankungen in der Grösse von 2 Kelvin üblich waren.

Die in Fig. 4 gezeigte Wasserheizungsanlage ist bis auf einen Sensor 14 zur Messung des Durchflusses, einem sogenannten Durchflussgeber, identisch mit der Anlage aus Fig. 1. Durch den Einbau des Durchflussgebers 14 ist bekannt, ob ein Bezug von Brauchwasser, Zapfung, an einem der Hähne 9, 10, 11, 12 getätigt wird. Während der Durchflussgeber 14 offen ist, d.h. wenn eine Zapfüng erfolgt, wird nach einem ersten Regelverfahren geregelt, bei dem die am Wassertemperaturfühler 6 gemessene Temperatur mittels Öffnen und Schliessen des motorgetriebenen Wasserventils 5 auf dem Brauchwasser-Temperatursollwert Ts gehalten wird. Die Ansteuerung des Wasserventils 5 mittels des Reglers 13 erfolgt dabei wie in den vorherigen Beispielen.

Meldet der Durchflussgeber 14 keine Zapfung, so ist das Einhalten des Brauchwasser-Temperatursollwertes Ts nicht mehr im vollen Umfang nötig, d.h. die Brauchwassertemperatur am Wassertemperaturfühler 6 kann auf einen reduzierten Temperatursollwert Tr abgesenkt werden. Es wird somit auf ein zweites Regelverfahren umgeschaltet, welches nachfolgend beschrieben wird. Durch den Wärmeinhalt des Wassers selbst, des Wärmetauschers und der Rohrleitungen wird dieses Absinken der Wassertemperatur eine Zeit t_{A} dauern. Während dieser Zeit, d.h. solange die Wassertemperatur den reduzierten Temperatursollwert Tr nicht unterschreitet, muss das Wasserventil 5 durch den Regler 13 nicht geregelt werden und wird dadurch geschont. Ausserdem werden unnötige Wärmeverlust durch Abstrahlung vermindert. Ist der vorbestimmte reduzierte Sollwert Tr erreicht wird das Wasserventil 5 geöffnet und somit wird der Sekundärkreis während einer Aufladezeit t_{L} wieder durch den Primärkreis auf den ursprünglichen Sollwert Ts geheizt. Dieses zweite Regelverfahren wird in jedem Fall durch eine Zapfung und somit ein Ansprechen des Durchflussgebers 14 sofort unterbrochen und auf das erste Regelverfahren umgeschaltet.

## Patentansprüche

1. Wasserheizungsanlage mit Regler (13) fiir die Heizwassertemperatur
wobei die Wasserheizungsanlage
eine Kaltwasserleitung (3),
eine Wasserheizung (1),
ein Stellglied (5) für die Regelung der Wasserheizung (1),
eine Heizwasserleitung (4),
einen Wassertemperaturfühler (6), und
ein oder mehrere Heizwasserverbrauchsgeräte (9-12) umfasst,
wobei die Wasserheizung (1) einerseits an der Kaltwasserleitung (3) angeschlossen ist, wobei die Wasserheizung (1) eine oder mehrere, an einander angeschlossenen Wasserleitungen umfasst,
wobei die Wasserheizung (1) andererseits an der Heizwasserleitung (4) angeschlossen ist,
wobei der Wassertemperaturfühler (6) in der Heizwasserleitung (4) oder in der Wasserheizung (1) auf der Seite der Heizwasserleitung (4) angeordnet ist,
wobei die Heizwasserverbrauchsgeräte (9-12) an der Heizwasserleitung (4) angeschlossen sind,
wobei der Regler (13) wenigstens ein Signal des Temperaturfühlers (6) bekommt und die Stellung des Stellglieds (5) regeln kann,
**dadurch gekennzeichnet,**
**dass** wenigstens falls die Heizwasserverbrauchgeräte (9-12) wenig Wärmeabgabe auslösen, der Regler (13) sich von einem ersten Regelverfahren auf mindestens eines von dem Mass und/oder Verzögerung der Reaktion bei gleichen Regelumständen verschiedenes zweites Regelverfahren umschalten kann,
und **dass** anderenfalls der Regler (13) sich sprungartig von dem zweiten Regelverfahren auf das erste Regelverfahren zurückschalten kann.

2. Wasserheizungsanlage mit Regler (13) für die Heizwassertemperatur gemäss Anspruch 1, **dadurch gekennzeichnet,**
**dass** der Regler (13) für das erste Regelverfahren geltende Regelparameter während des zweiten Regelverfahrens speichern kann, und
**dass** der Regler sprungartig von dem zweiten Regelverfahren auf das erste Regelverfahren zurückschalten kann durch Annahme dieser gespeicherten Regelparameter.

3. Wasserheizungsanlage mit Regler (13) für die Heizwassertemperatur gemäss Anspruch 1 oder 2, **dadurch gekennzeichnet,**
**dass** der Regler (13) unter gewissen Regelumstanden von dem ersten Regelverfahren auf das zweite Regelverfahren umschaltet, wobei unter den besagten Regelumständen der Absolutwert der Regeldifferenz kleiner ist als eine vorgewählte und/oder adaptiv angepasste Grenze, und der Absolutwert der Regeldifferenzänderung pro Zeiteinheit kleiner ist als eine vorgewählte und/oder adaptiv angepasste Grenze,
**dass** der Regler (13) gemäss dem zweiten Regelverfahren das Mass seiner Reaktion bei gleichen Regelumstanden kleiner macht, und
**dass** der Regler (13) unter anderen Regelumständen unmittelbar von dem zweiten Regelverfahren auf das erste Regelverfahren zurückschaltet.

4. Wasserheizungsanlage mit Regler (13) für die Heizwassertemperatur gemäss Anspruch 3, **dadurch gekennzeichnet,**
**dass** der Regler (13) die beiden Grenzen der besagten Regelumstände während des zweiten Regelverfahrens je adaptiv verringern kann.

5. Wasserheizungsanlage mit Regler (13) für die Heizwassertemperatur gemäss einem der Ansprüche 1 bis 4,
**dadurch gekennzeichnet,**
**dass** der Regler (13) gemäss dem zweiten Regelverfahren die Verzögerung seiner Reaktion bei gleichen Regelumständen vergrössert.

6. Wasserheizungsanlage mit Regler (13) für die Heizwassertemperatur gemäss einem der Ansprüche 1 bis 5,
**dadurch gekennzeichnet,**
**dass** der Regler (13) gemäss dem zweiten Regelverfahren jede Zykluszeit proportional wählt zu einer, im ersten Regelverfahren geltenden Nachstellzeit, dividiert durch den Absolutwert von der Differenz zwischen der momentanen Regeldifferenz und dem Produkt von der momentanen Regeldifferenzänderung pro Zeiteinheit und einer Abstellzeit.

7. Wasserheizungsanlage mit Regler (13) für die Heizwassertemperatur gemäss Anspruch 6, **dadurch gekennzeichnet,**
**dass** der Regler (13) gemäss dem zweiten Regelverfahren eine vorgewählte und/oder adaptiv angepasste Abstellzeit innerhalb eines Bereiches von 1 bis 7 Sekunden aufweist, und einen vorgewählten und/oder adaptiv angepassten Proportionsfaktor innerhalb eines Bereiches von 0,2 und 1,4 Kelvin.

8. Wasserheizungsanlage mit Regler (13) für die Heizwassertemperatur gemäss Anspruch 1 oder 2, **dadurch gekennzeichnet,**
**dass** der Regler (13) unter gewissen Regelumständen von dem ersten Regelverfahren auf das zweite Regelverfahren umschaltet, wobei unter den besagten Regelumständen die Stellung des Stellglieds (5) kleiner ist als eine vorgewählte und/oder adaptiv angepasste Grenze innerhalb das Stellungsbereiches, dass der Regler (13) gemäss dem zweiten Regelverfahren das Mass seiner Reaktion bei gleichen Regelumständen kleiner macht, und
**dass** der Regler unter anderen Regelumständen unmittelbar von dem zweiten Regelverfahren auf das erste Regelverfahren zurückschaltet.

9. Wasserheizungsanlage mit Regler (13) für die Heizwassertemperatur gemäss Anspruch 8, **dadurch gekennzeichnet,**
**dass** der Regler (13) die Stellung des Stellglieds (5) auf ein oder mehrere feste Stellungswerte innerhalb das Stellungsbereich steuern kann, und
**dass** der Regler (13) die Grenze auf einen oder je einen festen Stellungswert legt.

10. Wasserheizungsanlage mit Regler (13) für die Heizwassertemperatur gemäss Ansprüche 8 oder 9, **dadurch gekennzeichnet,**
**dass** die Wasserheizungsanlage einen Sensor umfasst,
wobei der Sensor die Stellung des Stellglieds (5) auf einem oder mehreren festen Stellungswerten innerhalb das Stellungsbereich erkennen kann,
wobei der Regler (13) wenigstens ein Signal des Sensors bekommt, und
**dass** der Regler (13) die Grenze auf einen oder je einen festen Stellungswert legt.

11. Wasserheizungsanlage mit Regler (13) für die Heizwassertemperatur gemäss Anspruch 10, **dadurch gekennzeichnet,**
**dass** der Sensor ein Schalter im Stellglied (5) ist,
wobei der Schalter bei einer Stellung des Stellglieds (5) unter einem festen Stellungswert betätigt wird.

12. Wasserheizungsanlage mit Regler (13) für die Heizwassertemperatur gemäss Anspruch 1 oder 2, **dadurch gekennzeichnet,**
**dass** der Regler (13) unter gewissen Regelumstanden von dem ersten Regelverfahren auf das zweite Regelverfahren umschaltet, wobei unter den besagten Regelumständen der Durchfluss von Heizwasser zu den Heizwasserverbrauchsgeräten (9-12) kleiner ist als eine vorgewählte und/oder adaptiv angepasste Grenze,
**dass** der Regler (13) gemäss dem zweiten Regelverfahren das Mass seiner Reaktion bei gleichen Regelumständen kleiner macht, und
**dass** der Regler (13) unter anderen Regelumständen unmittelbar von dem zweiten Regelverfahren auf das erste Regelverfahren zurückschaltet.

13. Wasserheizungsanlage mit Regler (13) für die Heizwassertemperatur gemäss Anspruch 12, **dadurch gekennzeichnet,**
**dass** der Regler (13) den Durchfluss von Heizwasser zu den Heizwasserverbrauchsgeräten (9-12) auf einen oder mehrere feste Durchflusswerte steuern kann, und
**dass** der Regler (13) die Grenze auf einen oder je einen festen Durchflusswert legt.

14. Wasserheizungsanlage mit Regler Regler (13) für die Heizwassertemperatur gemäss einem der Ansprüche 12 oder 13,
**dadurch gekennzeichnet,**
**dass** die Wasserheizungsanlage einen Sensor umfasst,
wobei der Sensor den Durchfluss von Heizwasser zu den Heizwasserverbrauchsgeräten (9-12) bei einem oder mehreren festen Durchflusswerten erkennen kann,
wobei der Regler (13) wenigstens ein Signal des Sensors bekommt, und
**dass** der Regler die Grenze auf einen oder je einen festen Durchflusswert legt.

15. Wasserheizungsanlage mit Regler (13) für die Heizwassertemperatur gemäss Anspruch 14, **dadurch gekennzeichnet,**
**dass** der Sensor ein Wasserzähler in der Heizwasserleitung (4) oder der Kaltwasserleitung (3) ist.

16. Wasserheizungsanlage mit Regler (13) für die Heizwassertemperatur einer Wasserheizungsanlage gemäss einem der Ansprüche 1 bis 15,
**dadurch gekennzeichnet,**
**dass** der Regler (13) Regelimpulse an das Stellglied (5) gibt, und
**dass**, falls die Heizwasserverbrauchgeräte (9-12) wenig Wärmeabgabe auslösen, die Dauer eines oder mehrerer Regelimpulse kleiner ist als 0,012 mal die Gesamtzeit für das ab Schlussstellung völlige Oeffnen des Stellglieds (5).

17. Wasserheizungsanlage mit Regler (13) für die Heizwassertemperatur gemäss Anspruch 16, **dadurch gekennzeichnet,**
**dass** die Dauer eines oder mehrerer Regelimpulse kleiner ist als 0,003 mal die Gesamtzeit für das ab Schlussstellung völlige Oeffnen des Stellglieds (5).

18. Wasserheizungsanlage mit Regler (13) für die Heizwassertemperatur gemäss einem der Ansprüche 1 bis 17,
**dadurch gekennzeichnet,**
**dass** der Regler (13), falls die Heizwasserverbrauchgeräte (9-12) wenig Wärmeabgabe auslösen, die Zykluszeiten grösser als 2 Sekunden wählt.

## Claims

1. A water heating installation with a regulator (13) for the hot water temperature,
wherein the water heating installation includes
a cold water pipe (3),
a water heating means (1),
an adjusting member (5) for regulation of the water heating means (1),
a hot water pipe (4),
a water temperature sensor (6), and
one or more hot water consumer devices (9-12),
wherein the water heating means (1) is connected on the one hand to the cold water pipe (3), wherein the water heating means (1) includes one or more water pipes connected to each other,
wherein the water heating means (1) is connected on the other hand to the hot water pipe (4),
wherein the water temperature sensor (6) is arranged in the hot water pipe (4) or in the water heating means (1) on the side of the hot water pipe (4),
wherein the hot water consumer devices (9-12) are connected to the hot water pipe (4), and
wherein the regulator (13) receives at least one signal from the temperature sensor (6) and can regulate the position of the adjusting member (5),
**characterised in that**
at least if the hot water consumer devices (-12) trigger little heat delivery, the regulator (13) can switch over from a first regulating procedure to at least one second regulating procedure which is different from the degree and/or delay of the reaction under the same regulating circumstances, and
otherwise the regulator (13) can switch back abruptly from the second regulating procedure to the first regulating procedure.

2. A water heating installation with a regulator (13) for the hot water temperature according to claim 1
**characterised in that** the regulator (13) can store regulating parameters applicable for the first regulating procedure during the second regulating procedure, and
the regulator can switch back abruptly from the second regulating procedure to the first regulating procedure by receiving said stored regulating parameters.

3. A water heating installation with a regulator (13) for the hot water temperature according to claim 1 or claim 2
**characterised in that** the regulator (13) under certain regulating circumstances switches over from the first regulating procedure to the second regulating procedure, wherein under said regulating circumstances the absolute value of the regulating difference is smaller than a preselected and/or adaptively adapted limit and the absolute value of the change in regulating difference per unit of time is smaller than a preselected and/or adaptively adapted limit,
the regulator (13) in accordance with the second regulating procedure makes the degree of its reaction smaller under identical regulating circumstances, and
the regulator (13) under other regulating circumstances switches back directly from the second regulating procedure to the first regulating procedure.

4. A water heating installation with a regulator (13) for the hot water temperature according to claim 3
**characterised in that** the regulator (13) can adaptively reduce each of the two limits of said regulating circumstances during the second regulating procedure.

5. A water heating installation with a regulator (13) for the hot water temperature according to one of claims 1 to 4
**characterised in that** in accordance with the second regulating procedure the regulator (13) increases the delay in its reaction under identical regulating circumstances

6. A water heating installation with a regulator (13) for the hot water temperature according to one of claims 1 to 5
**characterised in that** in accordance with the second regulating procedure the regulator (13) selects each cycle time proportionally to a readjustment time which applies in the first regulating procedure, divided by the absolute value of the difference between the instantaneous regulating difference and the product of the instantaneous change in regulating difference per unit of time and a shut-down time.

7. A water heating installation with a regulator (13) for the hot water temperature according to claim 6
**characterised in that** in accordance with the second regulating procedure the regulator (13) has a preselected and/or adaptively adapted shut-down time within a range of 1 to 7 seconds and a preselected and/or adaptively adapted proportion factor within a range of 0.1 and 1.4 Kelvin.

8. A water heating installation with a regulator (13) for the hot water temperature according to claim 1 or claim 2
**characterised in that** the regulator (13) under certain regulating circumstances switches over from the first regulating procedure to the second regulating procedure, wherein under said regulating circumstances the position of the adjusting member (5) is smaller than a preselected and/or adaptively adapted limit within the adjustment range,
the regulator (13) in accordance with the second regulating procedure makes the degree of its reaction smaller under identical regulating circumstances, and
the regulator (13) under other regulating circumstances switches back directly from the second regulating procedure to the first regulating procedure.

9. A water heating installation with a regulator (13) for the hot water temperature according to claim 8
**characterised in that** the regulator (13) can control the position of the adjusting member (5) to one or more fixed adjustment values within the adjustment range, and
the regulator (13) puts the limit at a or a respective fixed adjustment value.

10. A water heating installation with a regulator (13) for the hot water temperature according to claim 8 or claim 9
**characterised in that** the water heating installation includes a sensor,
wherein the sensor can detect the position of the adjusting member (5) at one or more fixed adjustment values within the adjustment range,
wherein the regulator (13) receives at least one signal from the sensor, and
the regulator (13) puts the limit at a or a respective fixed adjustment value.

11. A water heating installation with a regulator (13) for the hot water temperature according to claim 10
**characterised in that** the sensor is a switch in the adjusting member (5),
wherein the switch is actuated at a position of the adjusting member (5) below a fixed adjustment value.

12. A water heating installation with a regulator (13) for the hot water temperature according to claim 1 or claim 2
**characterised in that** the regulator (13) under certain regulating circumstances switches over from the first regulating procedure to the second regulating procedure, wherein under said regulating circumstances the through-flow of hot water to the hot water consumer devices (9-12) is smaller than a preselected and/or adaptively adapted limit,
the regulator (13) in accordance with the second regulating procedure makes the degree of its reaction smaller under identical regulating circumstances, and
the regulator (13) under other regulating circumstances switches back directly from the second regulating procedure to the first regulating procedure.

13. A water heating installation with a regulator (13) for the hot water temperature according to claim 12
**characterised in that** the regulator (13) can control the through-flow of hot water to the hot water consumer devices (9-12) to one or more fixed through-flow values, and
the regulator (13) puts the limit at a or a respective fixed adjustment value.

14. A water heating installation with a regulator (13) for the hot water temperature according to one of claims 12 and 13
**characterised in that** the water heating installation includes a sensor,
wherein the sensor can detect the through-flow of hot water to the hot water consumer devices (9-12) at one or more fixed through-flow values,
wherein the regulator (13) receives at least one signal from the sensor, and
the regulator (13) puts the limit at a or a respective fixed through-flow value.

15. A water heating installation with a regulator (13) for the hot water temperature according to claim 14
**characterised in that** the sensor is a water meter in the hot water pipe (4) or the cold water pipe (3).

16. A water heating installation with a regulator (13) for the hot water temperature according to one of claims 1 to 15
**characterised in that** the regulator (13) sends regulating pulses to the adjusting member (5), and
if the hot water consumer devices (9-12) trigger little heat delivery the duration of one or more regulating pulses is less than 0.012 times the total time for complete opening of the adjusting member (5) from the closed position.

17. A water heating installation with a regulator (13) for the hot water temperature according to claim 16
**characterised in that** the duration of one or more regulating pulses is less than 0.003 times the total time for complete opening of the adjusting member (5) from the closed position.

18. A water heating installation with a regulator (13) for the hot water temperature according to one of claims 1 to 17
**characterised in that** if the hot water consumer devices (9-12) trigger little heat delivery the regulator (13) selects the cycle times at greater than 2 seconds.

## Revendications

1. Installation de chauffage d'eau comportant, un régulateur (13) pour la température d'eau chaude, l'installation d'eau chaude comprenant :
une conduite d'eau froide (3),
un chauffage d'eau (1),
un organe de réglage (5) pour régler le chauffage d'eau (1),
une conduite d'eau chaude (4),
une sonde de température d'eau (6), et
un ou plusieurs appareils de consommation d'eau chaude (9 à 12),
le chauffage d'eau (1), d'une part, est raccordé à la conduite d'eau froide (3), le chauffage d'eau (1) comprenant une ou plusieurs conduites d'eau raccordées l'une à l'autre,
le chauffage d'eau (1) d'autre part étant raccordé à la conduite d'eau chaude (4),
la sonde de température d'eau (6) étant disposée dans la conduite d'eau chaude (4) ou dans le chauffage d'eau (1), du côté de la conduite d'eau chaude (4),
les appareils de consommation d'eau chaude (9 à 12) étant raccordés à la conduite d'eau chaude (4),
le régulateur (13) recevant au moins un signal de la sonde de température (6) et pouvant régler la position de l'organe de réglage (5),
**caractérisée**
**en ce que**, au moins dans le cas où les appareils de consommation d'eau chaude (9 à 12) dissipent peu de chaleur, le régulateur (13) peut commuter, d'un premier procédé de régulation à au moins un deuxième procédé de régulation, différent au niveau de l'intensité et/ou du retardement de la réaction, dans les mêmes circonstances de régulation,
et que, autrement, le régulateur (13) peut revenir, d'un coup, du deuxième procédé de régulation au premier procédé de régulation.

2. Installation d'eau chaude comportant un régulateur (13) pour la température d'eau chaude selon la revendication 1, **caractérisée en ce que** le régulateur (13) pour le premier procédé de régulation peut mémoriser des paramètres de régulation valides pendant le deuxième procédé de régulation, et
**en ce que** le régulateur peut être ramené d'un coup, du deuxième procédé de régulation au premier procédé de régulation, par adoption de ces paramètres de régulation mémorisée.

3. Installation d'eau chaude comportant un régulateur (13) pour la température d'eau chaude selon la revendication 1 ou 2, **caractérisée en ce que** le régulateur (13), dans certaines circonstances de régulation, commute du premier procédé de régulation au deuxième procédé de régulation, sachant que, au-dessous desdites conditions de régulation, la valeur absolue de la différence de régulation est inférieure à une limite présélectionnée et/ou ajustée de façon adaptative, et la valeur absolue de la modification de différence de régulation par unité de temps est inférieure à une limite présélectionnée et/ou ajustée de façon adaptative,
**en ce que** le régulateur (13) selon le deuxième procédé de régulation diminue l'intensité de sa réaction alors que les conditions de régulation sont identiques, et
**en ce que** le régulateur (13), dans d'autres conditions de régulation, revient directement du deuxième procédé de régulation au premier procédé de régulation.

4. Installation d'eau chaude comportant un régulateur (13) pour la température d'eau chaude selon la revendication 3, **caractérisée en ce que**
le régulateur (13) peut diminuer de façon adaptative les deux limites desdites conditions de régulation pendant le deuxième procédé de régulation.

5. Installation d'eau chaude comportant un régulateur (13) pour la température d'eau chaude selon l'une des revendications 1 à 4, **caractérisée en ce que**
le régulateur (13) augmente, selon le deuxième procédé de régulation, le retardement de sa réaction alors que les conditions de régulation sont identiques.

6. Installation d'eau chaude comportant un régulateur (13) pour la température d'eau chaude selon l'une des revendications 1 à 5,
**caractérisée en ce que**,
selon le deuxième procédé de régulation, le régulateur (13) choisit chaque temps de cycle, proportionnellement à un temps de rattrapage valant dans un premier procédé de régulation, divisé par la valeur absolue de la différence entre la différence de régulation momentanée et le produit de la modification de différence de régulation momentanée par unité de temps et un temps d'arrêt.

7. , Installation d'eau chaude comportant un régulateur (13) pour la température d'eau chaude selon la revendication 6, **caractérisée en ce que** le régulateur (13) selon le deuxième procédé de régulation présente un temps d'arrêt, présélectionné et/ou ajusté de façon adaptative, dans les limites d'une plage de 1 à 7 secondes, et un facteur de proportionnalité, présélectionné et/ou ajusté de façon adaptative, dans une plage de 0,2 à 1,4 Kelvin.

8. Installation d'eau chaude comportant un régulateur (13) pour la température d'eau chaude selon la revendication 1 ou 2, **caractérisée en ce que** le régulateur (13), dans certaines circonstances de régulation, commute du premier procédé de régulation au deuxième procédé de régulation, sachant que, dans lesdites conditions de régulation, la position de l'organe de réglage (5) est inférieure à une limite présélectionnée et/ou ajustée de façon adaptative à l'intérieur de la plage de réglage,
**en ce que** le régulateur (13) selon le deuxième procédé de régulation diminue l'intensité de sa réaction alors que les conditions de régulation sont identiques, et
**en ce que** le régulateur, dans d'autres conditions de régulation, revient directement du deuxième procédé de régulation au premier procédé de régulation.

9. Installation d'eau chaude comportant un régulateur (13) pour la température d'eau chaude selon la revendication 8, **caractérisée en ce que** le régulateur (13) peut commander la position de l'organe de réglage (5) à une ou plusieurs valeurs de réglage fixes à l'intérieur de la plage de réglage, et
**en ce que** le régulateur (13) fixe la limite à une valeur de réglage fixe ou à chaque valeur de réglage fixe.

10. Installation d'eau chaude comportant un régulateur (13) pour la température d'eau chaude selon la revendication 8 ou 9, **caractérisée en ce que** l'installation de chauffage d'eau comprend un capteur,
le capteur pouvant identifier la position de l'organe de réglage (5) à une ou plusieurs valeurs de réglage fixes dans la plage de réglage,
le régulateur (13) recevant au moins un signal du capteur, et
**en ce que** le régulateur (13) fixe la limite à une valeur de réglage fixe ou à chaque valeur de réglage fixe.

11. Installation d'eau chaude comportant un régulateur (13) pour la température d'eau chaude selon la revendication 10, **caractérisée en ce que**
le capteur est un interrupteur monté dans l'organe de réglage (5),
l'interrupteur étant actionné dans le cas où la position de l'organe de réglage (5) est inférieure à une valeur de réglage fixe.

12. Installation d'eau chaude comportant un régulateur (13) pour la température d'eau chaude selon la revendication 1 ou 2, **caractérisée en ce que** le régulateur (13), dans certaines circonstances de régulation, commute du premier procédé de régulation au deuxième procédé de régulation, sachant que, dans lesdites conditions de régulation, le flux d'eau chaude allant vers les appareils consommateurs d'eau chaude (9 à 12) est inférieur à une limite présélectionnée et/ou ajustée de façon adaptative,
**en ce que** le régulateur (13), selon le deuxième procédé de régulation, diminue l'intensité de sa réaction alors que les conditions de régulation sont identiques, et
**en ce que** le régulateur (13), dans d'autres conditions de régulation, revient directement du deuxième procédé de régulation au premier procédé de régulation.

13. Installation d'eau chaude comportant un régulateur (13) pour la température d'eau chaude selon la revendication 12, **caractérisée en ce que**
le régulateur (13) peut commander le flux d'eau chaude allant vers les appareils consommateurs d'eau chaude (9 à 12) à une ou plusieurs valeurs de débit fixe, et
**en ce que** le régulateur (13) fixe la limite à une valeur de débit fixe ou à chaque valeur de débit fixe.

14. Installation d'eau chaude comportant un régulateur (13) pour la température d'eau chaude selon l'une des revendications 12 ou 13, **caractérisée en ce que**
l'installation de chauffage d'eau comprend un capteur,
le capteur pouvant identifier le flux d'eau chaude allant vers les appareils de consommation d'eau chaude (9 à 12) pour une ou plusieurs valeurs de débit fixe,
le régulateur (13) recevant au moins un signal du capteur, et
**en ce que** le régulateur fixe la limite à une valeur de débit fixe ou à chaque valeur de débit fixe.

15. Installation d'eau chaude comportant un régulateur (13) pour la température d'eau chaude selon la revendication 14, **caractérisée en ce que**
le capteur est un compteur d'eau monté dans l'installation d'eau chaude (4) ou la conduite d'eau froide (3).

16. Installation d'eau chaude comportant un régulateur (13) pour la température d'eau chaude selon l'une des revendications 1 à 15, **caractérisée en ce que** le régulateur (13) fournit des impulsions de régulation à l'organe de réglage (5), et
**en ce que**, dans le cas où les appareils consommateurs d'eau chaude (9 à 12) produisent peu de pertes thermiques, la durée d'une ou plusieurs impulsions de régulation est inférieure à 0,012 fois le temps total, de l'ouverture complète à la position de fermeture, de l'organe de réglage (5).

17. Installation d'eau chaude comportant un régulateur (13) pour la température d'eau chaude selon la revendication 16, **caractérisée en ce que**
la durée d'une ou plusieurs impulsions de régulation est inférieure à 0,003 fois le temps total, pour obtenir l'ouverture complète à partir de la position de fermeture, de l'organe de réglage.

18. Installation d'eau chaude comportant un régulateur (13) pour la température d'eau chaude selon l'une des revendications 1 à 17, **caractérisée en ce que**
le régulateur (13), dans le cas où les appareils de consommation d'eau chaude (9 à 12) déclenchent peu de pertes thermiques, choisit les temps de cycle supérieurs à 2 secondes.
